# EUROPEAN PATENT APPLICATION

(11) **EP 1 093 287 A2**
(43) Date of publication of application: **18.04.2001**
(21) Application number: 00122471.6
(22) Date of filing: 13.10.2000
(51) Int. Cl.: H04N 1/00

(54) **Electronic device having multiple functions**

(30) Priority: 15.10.1999 JP 29372299; 24.02.2000 JP 2000047249
(71) Applicant: Murata Kikai Kabushiki Kaisha, Minami-ku, Kyoto-shi, Kyoto (JP)
(72) Inventor: Kuwahara, Tetsuya, Kyoto-shi, Kyoto (JP)
(74) Representative: Liedl, Christine, Dipl.-Chem.

(57) **Abstract**

A multi-function electronic device (10) that has plurality of items (5a) to be selected before reaching a desired function, but is easy to operate is realized with a small display (4) since the display presents an only single item (5a) at a time with simple screen scroll guidance (5b). The desired function is reached by going through a plurality of screens on same and different levels. The electronic device (10) includes a first pair of keys (1L, 1R) to shift the screen (5) on the same level (e.g., right and left) and a second pair of keys (1U, 1L) to change the screen level (e.g., up and down).

## Description

The present invention relates to multi-function electronic devices such as facsimile machines having one-touch and speed dial functions and multi-function telephones, of which functions are arbitrarily selectable by a user.

Recent facsimile machines and telephones possess a number of functions such as a one-touch dial function, speed dial function, programmed one-touch instruction function, transfer function and confidential data transmission function, and these machines are often categorized to multi-function electronic devices or machines.

These functions are generally presented to a user in the form of plural levels of screens; the user should go through a plurality of different levels of screens to instruct a desired function with desired particulars. For example, a large display of the multi-function electronic device such as LCD shows the user a first level of screen that presents a plurality of functions on a single screen. The user then selects one item among them by a cursor, ten-key or his/her finger, and presses an "enter" key. Subsequently, the display shows a next level of screen to the user such that the user can determine a detailed setting. This type of function setting may be referred to as multi-layer or multi-level, step-by-step (or screen-by-screen) selection.

With this way of reaching the last level of screen to instruct a desired function with desired particulars, the operator is easy to make a mistake because the operator has to make a correct choice among a large number of prompt terms/phrases/sentences/symbols/numbers on the relatively large screen at each level, and a series of selecting operations required to the user are sometimes complicated and troublesome. Further, a single screen should present a number of choices to the operator so that a large display is required.

An object of the present invention is to provide a multi-function electronic device that can overcome the above-described problems.

Specifically, an object of the present invention is to provide a multi-function electronic device that is easy to operate when a user has to select one item among a plurality of choices/options. In other words, the present invention aims to simplify a user's decision making process until completing a desired function setting.

Another object of the present invention is to provide a multi-function electronic device that does not require a large display to indicate necessary information to the user when making decisions/selections.

According to one embodiment of the present invention, there is provided a multi-function electronic device that includes an operation unit having first and second key units, a display for presenting selectable items in the form of plural screens, and a controller for making a selection upon user's operating the operation unit (e.g., pressing a certain key on the operation unit). The plurality of screens are prepared on a same level as well as different levels, the first key unit is used to shift the screen on the same level, and the second key unit is used to change the screen level. Therefore, the user can easily recognize the relation between the displayed item and the screen level/position. The first key unit may be referred to as a key unit for changing the display screen horizontally (i.e., right and left), and the second key unit may be referred to as a key unit for changing the display screen vertically (i.e., up and down). The screen may indicate one item at a time, and the user presses a key on the operation unit to seek for another item.

The first key unit may include a pair of keys arranged linearly and directed in opposite directions, and the second key unit may include another pair of keys arranged linearly and directed in opposite directions such that the first and second key units cross perpendicularly as a whole. In other words, the two keys of the first key unit and the two keys of the second key unit may be arranged radiantly from a mutual center on a control panel. For example, the two keys of the first key unit are "←" and "→" keys and utilized to shift the screen right and left, and the two keys of the second key unit are "↑" and "↓" keys and utilized to shift the screen up and down. These keys visually indicate the screen shift directions and are arranged radiantly so that the operation unit is easy to touch and the user easily understands the relationship between the displayed items and screen position/level. It should be noted that the first key unit and second key unit may cross diagonally.

The operation unit may include a mode key for bringing the multi-function electronic device into a function setting mode, and this key may be positioned at the center of the two keys of the first key unit and the two keys of the second key unit. The operation unit may have a circular or oval shape, and the two keys of the first key unit and the two keys of the second key unit may be elongated in a circumferential direction of the operation unit such that these four keys surround the mode key. This key arrangement also facilitates easy operation.

The display may indicate a single selectable item at a time (on a single screen) together with screen shift direction guidance. The screen shift direction guidance indicates presence of another item(s) on the same level of screen as well as another level(s) of screen. Therefore, the user easily recognizes from the current screen that another screen exists or does not exist next to (right and left of), above and below the current screen. The screen shift direction guidance has a simple configuration such as "←", "↑", "→" and "↓". Since the display presents one item on one screen with simple guidance, it can have a small size. Since the single selectable item is present to the user at a time, the user can select a desired setting always correctly. The screen shift direction guidance is visual guidance so that it facilitates the operation of the operation unit.

The display may be replaced by voice guidance, or may be used with voice guidance.
Figure 1A illustrates first and second key units of a multi-function electronic device according to the present invention;
Figure 1B illustrates a display with a guidance of the multi-function device shown in Figure 1;
Figure 1C illustrates a schematic overall structure of the multi-function device;
Figures 2 and 3 illustrate in combination a flowchart showing a procedure occurring inside the multi-function device;
Figure 4A illustrates an alternative example of the first and second key units; and
Figure 4B illustrates another alternative example of the first and second key units.

Embodiments of the present invention will now be described with reference to the accompanying drawings.

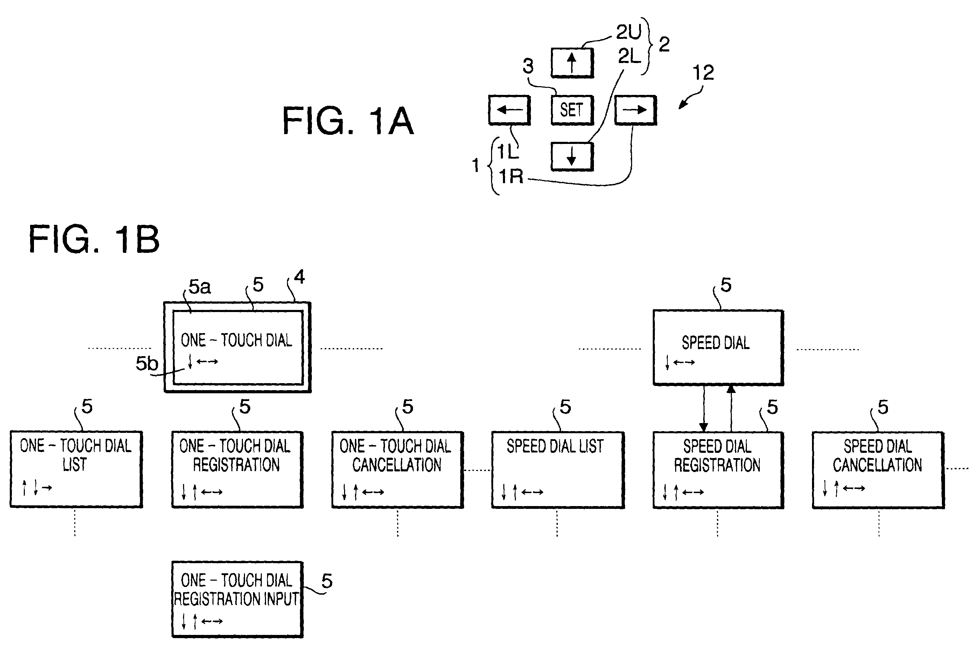

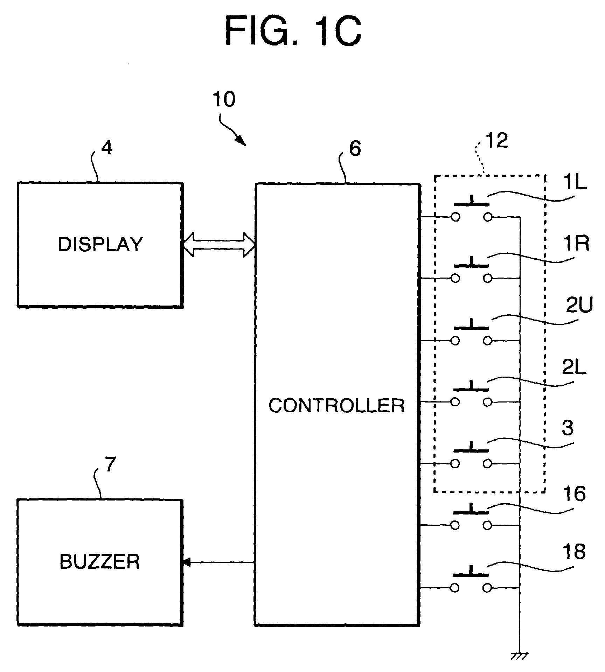

Referring first to Figure 1C, illustrated is an electronic device 10 having an operation unit 12, display 4, controller 6, buzzer 7, stop key 16 and enter key 18. The display 4, buzzer 7, operation unit 12, stop key 16 and enter key 18 are connected to the controller 6. The operation unit 12 includes five keys 1L, 1R, 2U, 2L and 3. As illustrated in Figure 1A, these keys are arranged in a + form, i.e., the first positive shift key 1L extends leftwards, first negative shift key 1R extends rightwards, second positive shift key 2U extends upwards, second negative shift key 2L extends downwards and function set mode key 3 is located at the center.

The first positive shift key 1L and first negative shift key 1R are used to select a function in a same level of selection, and this pair of keys are collectively referred to as a first key unit 1. The second positive shift key 2U and second negative shift key 2L are utilized to shift a level of selection, and this pair of keys are collectively referred to as a second key unit 2. The function set mode key 3 is provided for a user to change the operation mode of the electronic device 10 from a normal mode to a function set mode so that the user can determine/alter function setting of the electronic device 10. The enter key 18 is provided for the user to make a selection/determination when a desired item is shown in a screen. The desired item appears as the user operates the first and second key units 1 and 2 in reference to guidance (will be described). The stop key 16 is provided for returning the electronic device 10 to the normal mode.

In general, the items to be selected include various functions, symbols, words, numbers, etc. The following description, however, deals with a case where the functions are only items to be selected. It should be noted that the terms "positive" and "negative" used in this specification simply mean that directions to be selected are opposite, and there is no intent of limitation.

Referring to Figure 1B, illustrated is the display 4 that indicates guidance 5. It should be assumed that "ONE-TOUCH DIAL" is only displayed now. Other guidance is stored in a memory (not shown), and retrieved and displayed upon operation of the first and second key units 1 and 2. "ONE-TOUCH DIAL" and "SPEED DIAL" are guidance on the same level. Likewise, "ONE-TOUCH DIAL LIST", "ONE-TOUCH DIAL REGISTRATION", ..., and "SPEED DIAL CANCELLATION" are on the same level.

The guidance 5 includes a selectable function (function guidance) 5a and a shift direction guidance 5b. Roles of the guidance 5 and the first and second key units 1 and 2 will be described below. The shift direction guidance 5b may be referred to as a screen scroll direction guidance since it indicates into which direction a user can scroll the screen.

When the "ONE-TOUCH DIAL" is displayed in the display 4 as the function guidance 5a, pressing the first negative shift key 1R of the first key unit 1 results in change of the guidance 5a to "SPEED DIAL" on the same level, and pressing the first positive shift key 1L results in change of the guidance to "PROGRAMMED ONE-TOUCH" (not shown) on the same level. If the user presses the second negative shift key 2L of the second key unit 2, the guidance 5a changes to "ONE-TOUCH DIAL REGISTRATION" on the lower level.

In these selecting operations, the shift direction guidance 5b below the function guidance 5a, i.e., the downward, rightward and leftward arrows, indicates that there are selectable functions on the same and different levels. It assists the user when changing the function guidance 5a.

When "ONE-TOUCH DIAL REGISTRATION" is shown in the function guidance 5a on the display 4, the shift direction guidance 5b (four arrows in this instance) shows that the user can shift the screen up and down as well as right and left.

This level of screen 5 provides more specific items (setting details) such as registration, list and cancellation whereas the previous (or upper) level of screen indicates general names of functions such as one-touch dial, speed dial and programmed one-touch. The screen under this level indicates further details of setting such as entry. In this manner, the guidance 5 becomes more specific and gives more detailed accounts as it descends. The guidance 5, on the other hand, keeps providing a similar kind of choices as far as it remains on the same level. Thus, it is easier for the user to make a determination when operating the machine 10.

When "ONE-TOUCH DIAL REGISTRATION" is indicated in the function guidance 5a, the user's pressing the first positive shift key 1L changes the screen to "ONE-TOUCH DIAL LIST" on the same level. In this screen, the shift direction guidance 5b does not include the leftward arrow. Thus, the user easily recognizes that no selectable item (or no screen) exists in this direction. This prevents the user from doing unnecessary key pressing.

When "ONE-TOUCH DIAL LIST" or "ONE-TOUCH DIAL CANCELLATION" is indicated in the function guidance 5a, the shift direction guidance 5b includes the up and down arrows. In this embodiment, if the user pushes the second positive shift key 2U, the screen directly shifts upwards to "ONE-TOUCH DIAL" on the upper level without returning to "ONE-TOUCH DIAL REGISTRATION" on the same level. Likewise, if the user pushes the second negative shift key 2L, the lower level of screen "ONE-TOUCH DIAL REGISTRATION INPUT" immediately appears. In this way, it is possible to directly shift to the upper and lower level from any screen on the intermediate level. This reduces the number of the key pushing made by the user.

As understood from the above, since the multi-function electronic device 10 indicates one of the selectable items on the small display at a time and has the first and second pairs of keys 1 and 2 and guidance 5, it is easy to operate and difficult to incorrectly operate.

The illustrated guidance 5 is a reciprocal type, but an endless type may be employed instead. In the endless type, the shift direction guidance 5b below "ONE-TOUCH DIAL LIST" includes the left arrow. In either type, the user can reach a desired item with minimum key operations.

It should be noted that the scroll guidance 5b is not limited to the arrows. For example, it may be letters such as "RIGHT", "LEFT", "UP" and "DOWN", or "R", "L", "U" and "D".

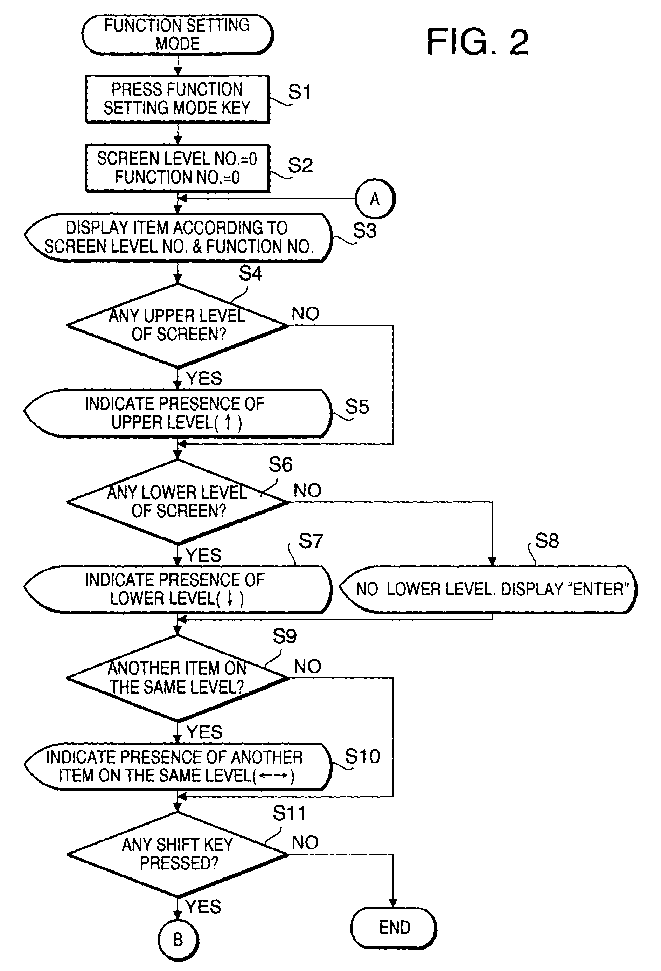

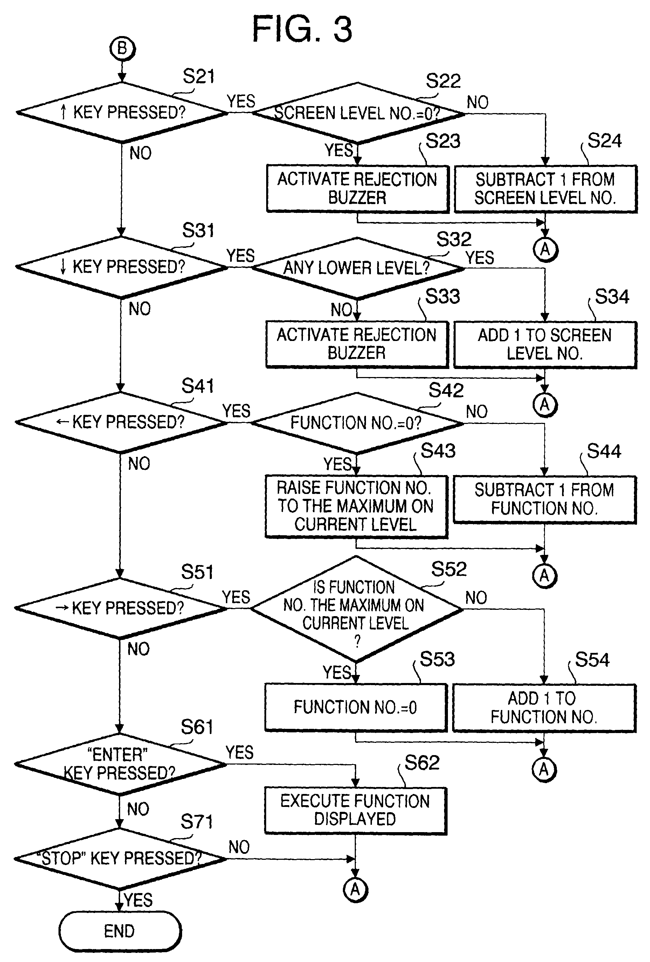

Referring now to Figures 2 and 3, a procedure inside the machine 1 will be described.

The function setting mode starts upon pressing of the key 3 (S1 in Figure 2). As an initial setting, the screen level number is set to 0 and the function number is set to 0 (S2). The screen level number is a number indicative of the selection level, and the function number indicates an item (item number) to be selected on that level.

The display 4 then shows the function guidance 5a in accordance with the screen level number and function number (S3). If there is an upper level of screen, the upward arrow is included in the scroll direction guidance 5b (S4 and S5). If not, no upward arrow is included in the scroll direction guidance 5b (No at S4). Subsequently, it is determined whether there is a lower level of screen. If the answer is yes, the downward arrow is included in the scroll direction guidance 5b (S6 and S7). If not, no downward arrow is included in the guidance 5b (No at S6), and "ENTER" is displayed (S8).

After that, it is determined whether another selectable item exists on the same level of screen (S9). If the answer is yes, the rightward and/or leftward arrow is included in the scroll direction guidance 5b (S10). If not, no such arrow is present. In this manner, the guidance 5 shown in Figure 1B is prepared.

Then, it is determined whether any one of the first positive shift key 1L, first negative shift key 1R, second positive shift key 2U and second negative shift key 2L is pressed (S11). If pressed, processing in accordance with the pressed key is executed (S21 to S51 in Figure 3). If no shift key is pressed, the program proceeds to "END."

Referring to Figure 3, if the second positive shift key (upward arrow button) 2U is pressed by the user (S21), it is determined whether the current screen level number is 0 (S22). When it is not zero, the screen level number is subtracted by one (S24), and the program returns to S3. When it is zero, a rejection buzzer is activated (S23), and the program returns to S3. It should be noted that "0" means that there is no upper level. Thus, pressing the upward arrow button 2U in such a case causes the buzzer to act.

If the second negative shift key (downward arrow button) 2L is pressed (S31), it is determined whether there is a lower level of screen (S32). When there is a lower level, one is added to the screen level number (S34) before going to S3. When no lower level exists, a rejection buzzer is activated (S33), and the program returns to S3.

If the first positive shift key (leftward arrow button) 1L is pressed (S41), it is determined whether the function number is 0 (S42). It should be noted "0" means that there is no left screen. When it is not zero, one is subtracted from the function number (S44), and the program returns to S3. When it is zero, the function number is raised to the maximum on the current level (S43), and the program returns to S3. If there are six selectable items on the same level, the maximum number will be five.

If the first negative shift key (rightward arrow button) 1R is pressed (S51), it is determined whether the function number is the maximum number on the current level (S52). When it is not, one is added to the function number (S54), and the program returns to S3. When it is the maximum number, the function number is set to zero (S53), and the program returns to S3. It should be noted that the maximum number means that there is no more right screen.

If none of the first positive shift key 1L, first negative shift key 1R, second positive shift key 2U and second negative shift key 2L is pressed, it means that the item currently displayed is the item to be selected ultimately. Thus, it is determined whether the enter key 18 is pressed (S61). When pressed, that function is executed (S62), and the program returns to S3. When not pressed, it is determined whether the stop key 16 is pressed (S71). If pressed, the program proceeds to "END". If not, it returns to S3.

By repeating the above process, the selection described in connection with Figures 1A to 1C is enabled.

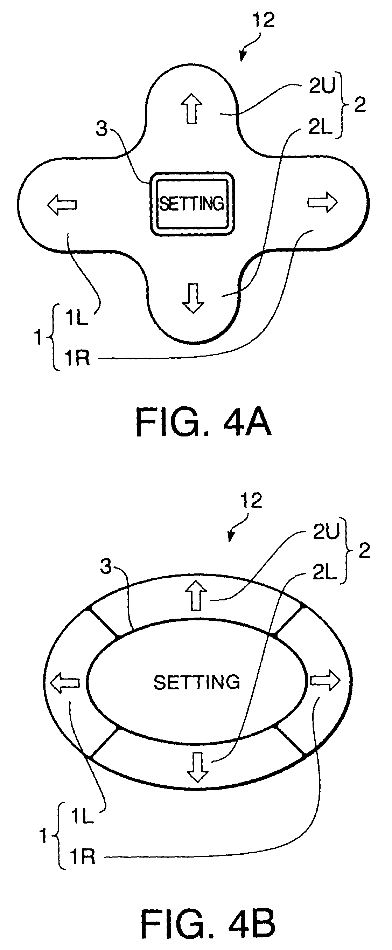

Referring to Figures 4A and 4B, illustrated are alternative examples of the operation unit 12.

As shown in Figure 4A, the first positive shift key 1L, first negative shift key 1R, second positive shift key 2U, second negative shift key 2L and function setting mode key 3 may be configured as a single part. In Figure 1A, these keys are separate.

In Figure 4B, the first positive shift key 1L, first negative shift key 1R, second positive shift key 2U and second negative shift key 2L are arranged in an oval or annular form, and the setting key 3 is surrounded.

In either case, the positions of the keys 1L, 1R, 2U and 2L are simple and match scroll directions of the screen. Therefore, it is easy to operate the machine 1.

It should also be noted that the keys 1L, 1R, 2U, 2L and 3 may be configured like a joy stick of a home game machine so that the user grasps a single bar when operating the machine 1.

It should be noted that the display 4 is one example of informing unit for presenting the selectable items 5a together with guidance 5b. Specifically, although the first and second keys 1 and 2 are utilized with the display 4 (i.e., the guidance 5a and 5b) in the illustrated embodiment, these keys may be utilized with voice guidance. In this case, the screen 4 is replaced by the voice guidance. Alternatively, the display 4 and voice guidance may be used in combination. For instance, the display may only indicate the scroll direction guidance 5b and the voice guidance may provide the function guidance 5a. Use of the voice guidance may further facilitate easy operation of the electronic device 10.

## Claims

1. A multi-function electronic device (10) including:
an operation unit (12) having first and second key units (1, 2);
an informing unit (4) for presenting selectable items (5a) with guidance (5b) such that a single selectable item is presented at a time; and
a controller (6) for making a selection upon user's operating the operation unit (1, 2), the first key unit (1) being used to change the selectable items (5a) on a same level, and the second key unit (2) used to change a level of selection.

2. The multi-function electronic device according to claim 1, characterized in that the informing unit includes a display (4) for presenting selectable items (5a) and guidance (5b) in the form of plural screens such that a single selectable item is indicated with guidance (5b) in a single screen at a time, the screens being prepared on a same level as well as different levels.

3. The multi-function electronic device according to claim 1, characterized in that the informing unit includes a voice guidance for presenting selectable items (5a) and guidance (5b).

4. The multi-function electronic device according to claim 1, characterized in that the informing unit includes a display (4) for displaying selectable items (5a) in the form of plural screens such that a single item is indicated in a single screen at a time, the screens being prepared on a same level as well as different levels, and voice guidance (5b) for presenting how to scroll the screen.

5. The multi-function electronic device according to claim 1, 2, 3 or 4, characterized in that the selectable items (5a) include a plurality of functions of the multi-function electronic device.

6. The multi-function electronic device according to claim 2, 4 or 5, characterized in that the guidance (5b) is screen shift direction guidance (5b) for the first and second key units (1, 2).

7. The multi-function electronic device according to any one of claims 1 to 6, characterized in that the first key unit (1) includes a first pair of keys (1L, 1R) arranged linearly and directed in opposite directions, and the second key unit (2) includes a second pair of keys (2L, 2R) arranged linearly and directed in opposite directions such that the first and second key units (1, 2) cross perpendicularly as a whole, and the first and second pairs of keys (1L, 1R, 2U, 2L) are arranged radiantly.

8. The multi-function electronic device according to any one of claims 1 to 7, characterized in that the operation unit (12) includes a mode key (3) for bringing the multi-function electronic device into a function setting mode, and the mode key is surrounded by the first and second pairs of keys.

9. The multi-function electronic device according to any one of claims 2 and 4 to 8, characterized in that the first pair of keys (1L, 1R) of the first key unit (1) are "←" and "→" keys and utilized to shift the screen (5) right and left, and the second pair of keys (2U, 2L) of the second key unit (2) are "↑" and "↓" keys and utilized to shift the screen up and down.

10. The multi-function electronic device according to any one of foregoing claims, characterized in that the operation unit (12) has a circular or oval shape, and the first pair of keys and the second pairs of keys are elongated in a circumferential direction of the operation unit such that these four keys surround the mode key.

11. The multi-function electronic device according to any one of claims 2 and 4 to 10, characterized in that the screen shift direction guidance (5b) indicates presence of another item(s) on the same level of screen and presence of another level(s) of screen.

12. The multi-function electronic device according to any one of claims 2 and 4 to 11, characterized in that the screen shift direction guidance (5b) includes "←", "↑", "→" and "↓".
